# EUROPÄISCHE PATENTSCHRIFT

(11) **EP 3 310 720 B1**
(45) Veröffentlichungstag und Bekanntmachung des Hinweises auf die Patenterteilung: **04.12.2019**
(21) Anmeldenummer: 16727690.6
(22) Anmeldetag: 07.06.2016
(51) Int. Cl.: C02F 3/12

(54) **VERFAHREN ZUR AEROBEN BEHANDLUNG EINES BIOLOGISCH ABBAUBAREN ABWASSERSTROMS**
AEROBIC PROCESS FOR TREATING BIODEGRADABLE WASTE WATER
PROCÉDÉ AÉROBIE DE TRAITEMENT D'UN FLUX D'EAUX RÉSIDUAIRES BIODÉGRADABLES

(30) Priorität: 16.06.2015 DE 102015109626
(43) Veröffentlichungstag der Anmeldung: 25.04.2018
(73) Patentinhaber: Inwatech Enviromental Kft., 1124 Budapest (HU)
(72) Erfinder: LORX, Viktor, Ungarn (HU)
(74) Vertreter: Charrier Rapp & Liebau
(86) Internationale Anmeldenummer: PCT/EP2016/062844
(87) Internationale Veröffentlichungsnummer: WO 2016/202628

(56) Entgegenhaltungen:
- US-A- 4 663 044
- US-A- 5 624 562
- US-A- 5 989 428
- US-A1- 2007 175 823

## Beschreibung

Die Erfindung betrifft ein Verfahren zur Konditionierung eines biologisch abbaubaren Abwasserstroms nach dem Oberbegriff des Anspruchs 1.

Nach dem Stand der Technik wird biologische Abwasserreinigung durch kontinuierlich betriebene Belebungsbecken, gefolgt von kontinuierlich durchflossenen Absatzbecken betrieben, oder durch zyklische Abwasseranlagen (SBR= Sequencing-Batch-Reaktor) mit wechselndem Wasserspiegel und aufeinander folgenden Phasen von Belüften, Sedimentieren und Abziehen. Ziel der Anlagen ist es, neben den Kohlenstoffverbindungen, Ammoniumverbindungen durch Nitrifikation und Nitrate durch Denitrifikation sowie Phosphor durch biologische oder chemische Inkorporation zu entfernen und den dabei entstehenden biologischen Schlamm (Belebtschlamm) in Reaktoren zu kultivieren, diesen nach dem Reinigen der Abwässer durch Sedimentation vom gereinigten Abwasser wieder abzutrennen und dieses somit auch von Feststoffen zu befreien.

Die Steuerung von kontinuierlich betriebenen Anlagen kann durch ablaufseitig gelegene Messsysteme erfolgen, welche Betriebsparameter erkennen und dementsprechend in die Prozesssteuerung der Belüftungs- bzw. Rührphasen eingreifen. Bei SBR Anlagen ist eine ablaufseitige Prozesskontrolle nicht zweckmäßig, da nach Beendigung des Behandlungszyklus und somit Entleerung der Anlage keine Möglichkeit mehr besteht, durch Änderung der Prozessparameter das Behandlungsergebnis zu beeinflussen, wodurch es angezeigt erscheint, insbesondere bei SBR Anlagen, bereits zu Beginn der Reaktionsphase über Online-Atmungs-Raten eine Prognose darüber zu treffen, welche Belüftungsintensität bzw. Belüftungsdauer für den nachfolgenden Zyklus, abhängig von der gerade vorliegenden Belastung, anzusetzen ist. Aus der EP 0 260 187 A2 ist bekannt, durch Anwendung der Integralrechnung und Vergleich des Verlaufs einer theoretischen Reinwasserbelüftungskurve mit einer tatsächlich gemessenen Abwasserbelüftungskurve, darstellend den Sauerstoffgehalt über die Zeit, das Verhältnis zu bestimmen, welches im folgenden Zyklus die belüfteten und nicht belüfteten Zeiten innerhalb der Reaktionsphase regelt. Hierbei wird aus der theoretischen Eintragskapazität des Belüftungssystems unter Reinwasserbedingungen und den tatsächlich vorhandenen Zehrungsbedingungen im Reaktor ein Verhältniswert bestimmt und zur Regelung verwendet.

Die CN 102183910 B offenbart ein ähnliches System, zusätzlich beruhend auf der Messung einer Schlammkonzentration und einem Schlammkonzentrationsdetektor, welche ebenfalls dazu verwendet werden, in Abhängigkeit der gemessenen Zehrungsrate die Belüftungszeit, hauptsächlich jedoch die Intensität zu beeinflussen. Hauptsächlich wird also von einer Konstanten durch eine Geradengleichung ausgedrückten Verhältnismäßigkeit zwischen mit unterschiedlichen Methoden messbaren Sauerstoffaufnahmeraten und der Belüftungszeit oder - Intensität ausgegangen. Außer Acht gelassen wird bei den zitierten Druckschriften, dass dieses Verhältnis zwar dazu geeignet ist, die mechanische Überkapazität einer Belüftungseinrichtung gegenüber dem aktuellen Bedarf unter Betriebsbedingungen zu errechnen, aber nicht den Bedarf an biologischer Reaktionszeit errechnen oder regeln kann. Ebenfalls nicht berücksichtigt wird, dass die Reinigungsleistung einerseits eine Funktion der Belastung und somit der Sauerstoffversorgung ist, aber andererseits eines davon weitestgehend unabhängigen Bedarfes einer Reaktionszeit für den Abbau von Ammoniumverbindungen, welche sich nur in einem geringen Maße wiederum in der Sauerstoffzehrungsmessung eines unkonditionierten Schlammes ausdrückt. Insbesondere wird außer Acht gelassen, dass es keinen Zusammenhang gibt zwischen installierter Leistung der Gebläse und notwendiger Reaktionszeit für den Abbau der Ammoniumverbindungen, welche sich durch Atmungsraten nicht ausreichend messen lassen und demzufolge auch keinen Rückschluss darüber geben, ob die Belüftungszeit für den Abbau dieser Verbindungen ausreicht oder nicht. Insbesondere sind konstante Verhältnisrechnungen zwischen gemessener Sauerstoffzehrungsrate und theoretisch möglicher Sauerstoffversorgungsrate unter Normbedingungen ohne entsprechend konditioniertem Schlamm untauglich, um über den Weg einer linearen Verbindung direkt proportional die Gebläselaufzeit zu beeinflussen. Dies offenbart auch die physikalische Notwendigkeit, bei steigender Temperatur dem Abwasser für denselben Reinigungseffekt und Sauerstofftransfer nur geringfügig mehr Prozessluft zur Verfügung stellen zu müssen, währenddessen bei höheren Temperaturen die notwendige Reaktionszeit zur Entfernung schädlicher Stickstoffverbindungen gleichzeitig stark abnimmt. So steigt zum Beispiel die Bedarfskapazität zur Luftversorgung bei zunehmender Temperatur pro 10 Grad Celsius um nur ca. 9%, jedoch sinkt die notwendige Reaktionszeit bei gleicher Belastung pro 10 Grad desselben Intervalls auf 40%.

Daraus folgt, dass eine Sauerstoffaufnahmerate gemessen bei 10 Grad derart zu interpretieren wäre, dass sie möglicherweise gerade ausreicht, um die langsamsten prozesskinetischen Abläufe gerade noch stattfinden zu lassen, während bei 20 Grad bei selber Belastung lediglich eine um 9 % höhere Atmungsrate gemessen werden würde, während jedoch tatsächlich bei der höheren Temperatur derselbe Behandlungseffekt in nur 40% der Reaktionszeit erreicht werden könnte. Die Erfindungen lassen ebenfalls außer Acht, dass insbesondere bei der gewünschten Messung am Beginn eines Belüftungszyklus in einem SBR-Verfahren keinerlei Belastung vorliegt und sich aus messtechnischen Überlegungen hinsichtlich des Sauerstoffanstiegs oder -abfalls nur kurze Messintervalle von einigen Minuten anbieten, in denen bei üblich verwendeten Betriebsweisen nur wenige Prozent der Dimensionierungsbelastung dem beginnenden Zyklus zugeführt worden sind und durch die eintretende Verdünnung daher nur geringe Auswirkungen auf die Atmungsrate zu erwarten sind.

Aus der US 6,344,143 B1 ergeben sich übliche Belüftungsphasen von 45-90 Minuten sowie ein Zuführen des unbehandelten Rohabwassers nahe dem Boden des Reaktors.

Verbreiteter Stand der Technik sind darüber hinaus durchaus Belüftungsphasen und Befüllphasen von mehreren Stunden, wobei die insbesondere für den Beginn der Belüftungsphase gewünschte Zehrungsmessung, für den Fall einer Messung über eine Abnahmekurve, wegen der notwendigen Vermeidung der Sedimentation innerhalb von nur wenigen Minuten abgeschlossen werden müsste, oder für den Fall einer Bestimmung durch eine Anstiegsmessung zur zweckdienlichen Vermeidung von Sauerstoffkonzentrationen über 3 Milligramm pro Liter ebenfalls innerhalb weniger Minuten abgeschlossen sein müsste, damit eine verbleibende Beeinflussbarkeit der Belüftungsstrategie überhaupt gegeben sein kann.

Eine Betriebsweise als diskontinuierlich beschickte SBR Anlage, deren Beschickungsphase mit der Belüftungsphase beginnt, verbietet sich daher von selbst, für eine solche oben genannte Steuerungsstrategie, weil eben mit Beginn der Belüftung und Befüllung keine repräsentativen Daten gewonnen werden können, die auf einen weiteren Verlauf des Sauerstoffbedarfs im Zyklus zuverlässig Rückschluss erlauben.

Kontinuierlich beschickte SBR Anlagen, wie zum Beispiel offenbart in WO 2013/041893 A1, müssen darüber hinaus mit Strategien zur Vermeidung von Kurzschlussströmungen ausgestattet werden, welche das in der genannten Erfindung offenbarte System durch Hinzufügen des ungereinigten Abwassers in den Reaktor nahe des Bodens des Reaktors mit einem Verteilsystem aus Rohren bei aufwärts gerichtetem Filtrieren durch das vorhandene Schlammbett einer Lösung zugeführt wurde, welches aber zusätzlich noch eines mechanischen Durchmischungssystems bedarf. Auf das Vermeiden von Kurzschluss Strömungen zum Dekanter wurde auch bei dieser Erfindung kein Bedacht genommen.

Ein ähnliches System ist auch in der US 6,344,143 B1 beschrieben, wobei während kontinuierlicher Zuführung des Abwasserstroms und diskontinuierlicher Belüftung und Klarwasserabzugs externe Kohlenstoffquellen zugegeben werden, welche zusätzlich die Polyphosphatakkumulation unterstützen. Hier kommt es darauf an, kohlenstoffhaltige Verbindungen im Schlammbett des Reaktors zur Verfügung zu stellen, um damit bestimmte Reaktionen zu begünstigen, ohne den Schlamm jedoch für eine aussagekräftige Messung der Sauerstoffaufnahmerate zu konditionieren oder Kurzschlussströme zu verhindern.

Die WO 2001/064590 A1, beschreibt eine Anlage mit zyklischem Betrieb und konstantem Wasserspiegel mit verschiedenen Kompartments, welche hintereinander durchflossen werden und deren Funktion und Reihenfolge der Durchströmung durch Änderung des Schaltkreises austauschbar ist.

Die EP 2 606 007 A1 beschreibt eine zyklische Betriebsweise, mit abwechselnden Folgen von Fasten und Füttern mit rasch abbaubaren Kohlenstoffverbindungen bei einer Belastungsrate von 2 kg CSB pro m³ und Tag, wobei es sich hier um einen Hochlastreaktor handelt, speziell ausgeführt zur Erhöhung des Anreicherungspotentials der Polyhydroxyalkanoate (PHA), welche sich jedoch nicht aufgrund des hohen Belastungsbereichs für die gegenständliche Erfindung, betreffend die vollständige Reinigung von kommunalem und industriellem Abwasser und weitestgehende Befreiung von organischem und anorganischen Ammoniumverbindungen im Sinne der gezielt ablaufenden Nitrifikation und Denitrifikation, anwenden lassen.

Die US 5,989,428 offenbart ein gattungsgemäßes Verfahren mit variablem Wasserspiegel, Belüftung, Schlammrezirkulation und einem Selektor, wobei die Sauerstoffaufnahmerate gegen Ende der Belüftungsphase gemessen wird, jedoch die Sauerstoffkonzentration in aufeinander folgenden diskreten Stufen auf einen Wert von bis zu 2,5 mg pro Liter angehoben wird. Auch hier wird nicht auf die der vorliegenden Erfindung zugrunde liegenden Aufgabenstellung, einer möglichen gleichzeitigen und ununterbrochenen Befüllung mit einhergehender vorauswirkender Sauerstoffregelungsstrategie, eingegangen. Eine während der Sedimentationsphase weiterlaufende Konditionierung des Belebtschlammes ist auch hier durch das Fehlen eines geeigneten Belüftungssystems, welches in der Sedimentationsphase zumindest in einem Teil des Behältnisses weiter betrieben werden könnte ausgeschlossen, da sich durch das Fehlen eines eigenen Sedimentationsraumes nach dem Selektor ein Zustrom von Abwasser in der nicht belüfteten Phase ebenso von selbst verbietet, wie das Betreiben eines Rezirkulationsstromes in der nicht belüfteten Phase.

Auch ist es Stand der Technik, Belüftungssysteme zur Belüftung von parallel, zyklisch betriebenen SBR Anlagen so zu gestalten, dass Prozessluftgebläse diese Prozessluft zunächst in der Belüftungsphase eines Beckens in dieses eine Becken alleine eintragen und während der nicht belüfteten Phase dieses Beckens den Eintrag in ein anderes paralleles Becken alleine bewirken. Ein gleichzeitiges Belüften mehrerer paralleler SBR Becken zusammen, ist im Falle der Betriebsweise mit wechselndem Wasserspiegel dadurch nicht zweckmäßig, da sich aus dem unterschiedlichen hydrostatischen Druck keine Belüftung jenes Beckens ergeben würde, welches den höheren hydrostatischen Druck entgegensetzt.

Die US 4,663,044 A beschreibt eine Anlage mit 3 hintereinander geschalteten Reaktoren A bis C, wobei der Zustrom aus dem Reaktor A in den Reaktor B während der Dekantierphase unterbrochen wird und der Reaktor A nur gemischt wird und nur die Reaktoren B und C belüftet werden. Dies hat zur Folge, dass wertvolle Adsorptionskapazität und Adsorptionszeit im Reaktor A verloren geht und dieser auch nicht zur weiteren Füllung und somit Aufstau des Reaktors B benutzt werden kann. Der Reaktor A muss der Erfindung zu Folge auch durch eine Vorrichtung abgesperrt werden und die Belüftungseinrichtung, die während der Sedimentationsphase des Reaktors B und C nicht betrieben wird, steht auch für weitere Prozessluftversorgung des Reaktors A gar nicht zur Verfügung. Des Weiteren sollen der Schlamm des Reaktors C sowohl in den Reaktor A als auch B rezirkuliert werden und der Reaktor B soll eine Support Matrix für Biofilme enthalten.

Die selbe Ausgestaltung findet weitere Erläuterung in der US 5,013,441 A, in der noch einmal präzisiert wird, dass die drei Reaktorzonen in freier Wasserspiegelkommunikation betrieben werden und nur der letzte der drei Reaktoren belüftet wird und Schlamm vom zweiten und vom dritten Reaktor in den ersten Reaktor rezirkuliert wird. Auch diese Anlage ist darauf angewiesen, den Zulauf zu den drei in Serie betriebenen Reaktorteilen erst nach dem Dekantiervorgang wieder zuzulassen, um das Aufwirbeln des Schlammbettes im letzten Reaktor hintan zu halten.

Die US 5624 562 A offenbart ein Verfahren zur Abwasserbehandlung unter Durchführung einer Reihe von Behandlungsstufen in einem einzigen Reaktor mit variablen Tiefen, um biochemischen und chemischen Sauerstoff zu reduzieren. Dabei wird die Atmungsrate des Abwassers erfasst und kontrolliert.

Aufgabe der vorliegenden Erfindung ist es nun, die vorstehend genannten Probleme zu lösen und ein verbessertes Verfahren zur Konditionierung biologisch abbaubarer Abwasserströme bereitzustellen.

Gelöst wird diese Aufgabe durch ein Verfahren mit den Merkmalen des Anspruchs 1. Vorteilhafte Ausgestaltungen sind den Unteransprüchen entnehmbar.

Bei dem erfindungsgemäßen Verfahren zur Konditionierung eines biologisch abbaubaren Abwasserstroms durch drei in Serie geschaltete Kammern fließt der Abwasserstrom in eine als Kontaktor bezeichnete erste Kammer zu, wird von dort in eine als Kaptor bezeichnete zweite Kammer geleitet und wird anschließend einer als Reaktor bezeichneten dritten Kammer zugeführt, welche in freier Flüssigkeitskommunikation mit dem Kaptor steht und zyklisch in einer Belüftungsphase, einer Sedimentationsphase und einem Klarwasserabzug betrieben wird. Zudem wird Abwasser zusammen mit Belebtschlamm von dem Reaktor in Form einer Rezirkulation zu dem Kontaktor gefördert. Das Verfahren ist dadurch gekennzeichnet, dass dem Kontaktor kontinuierlich Abwasser zugeführt wird, welches im Kontaktor mittels eines Belüftungssystems eine ununterbrochene Luftsauerstoffzuführung erfährt, und das Belüftungssystem eine Luftsauerstoffzuführung in den Reaktor in Abhängigkeit von einer Atmungsrate des Abwassers im Kaptor, welche über die zeitliche Änderung des Sauerstoffgehalts des Abwassers in dem Kaptor im selben Zyklus bestimmt wird, regelt. Hierdurch kann sehr präzise die Atmungsrate des anschließend im Reaktor befindlichen Abwassers noch im selben Zyklus direkt im Kaptor ermittelt werden, was eine effiziente Umsetzung des Abwassers im Reaktor ermöglicht. Zur Bestimmung der Atmungsrate des Abwassers im Kaptor sind auch andere Arten zur Bestimmung der Atmungsrate grundsätzlich geeignet und die Erfindung nicht hierauf beschränkt.

In einer vorteilhaften Ausführungsform kann bei geringer zeitlicher Änderungen des Sauerstoffgehalts des Abwassers im Kaptor eine hohe Luftsauerstoffzuführung und bei größerer zeitlicher Änderungen des Sauerstoffgehalts des Abwassers im Kaptor eine geringere Luftsauerstoffzuführung in das Abwasser im Reaktor über das Belüftungssystem erfolgen.

Bevorzugt kann die zeitliche Änderung des Sauerstoffgehalts des Abwassers im Kaptor durch eine Messung der Änderung der Geschwindigkeit des Sauerstoffanstieges im Kaptor bei Einschalten des Belüftungssystems im Kaptor ermittelt werden.

Vorteilhaft kann die Luftsauerstoffzuführung in den Reaktor durch das Belüftungssystem durch Einstellen der Dauer und/oder der Intensität der Luftsauerstoffzuführung erfolgen.

Eine besonders präzise Messung der zeitlichen Änderung des Sauerstoffgehalts des Abwassers im Kaptor wird mittels mindestens einer im Kaptor angeordneten Sauerstoffsonde erreicht. Besonders bevorzugt können im Kaptor und/oder den weiteren Kammern jeweils 2 Sauerstoffsonden vorgesehen sein.

Um einen hohen Automatisierungsgrad zu ermöglichen, kann das Belüftungssystem Absperrungen, beispielsweise in Form von ansteuerbaren Ventilen, umfassen, mit denen programmgesteuert die Sauerstoffkonzentration in jeder Kammer über eine Zuteilung der Luftsauerstoffzuführung erfolgt. Die Zuteilung der Luftsauerstoffzuführung kann dabei besonders bevorzugt derart erfolgen, dass die Summe aus Druckverlust des Belüftungssystems im Kontaktor zuzüglich des konstanten Wasserspiegels im Kontaktor gleich ist der Summe aus Druckverlust des Belüftungssystems im Reaktor zuzüglich des hydrostatischen Mindestwasserspiegels Reaktor bzw. die Summen um nicht mehr als 60 %, besser jedoch um nicht mehr als 40 %. voneinander abweichen.

In einer vorteilhaften Ausführungsform kann die Sauerstoffkonzentration im Reaktor mittels mindestens einer im Reaktor angeordneten weiteren Sauerstoffsonde gemessen werden und abhängig davon die mittels des Belüftungssystems in den Reaktor eingeführte Luftsauerstoffzuführung fein eingestellt wird.

Erfindungsgemäß wird der Wasserspiegel im Kontaktor mittels einer Überlaufkante zwischen dem Kontaktor und dem Kaptor konstant gehalten und das Abwasser über diese Überlaufkante in einem konstanten Abfluss von dem Kontaktor zu dem Kaptor geleitet.

Weitere Besonderheiten und Vorzüge der Erfindung ergeben sich aus der folgenden Beschreibung eines bevorzugten Ausführungsbeispiels anhand der Zeichnung. Es zeigen:
- **Fig. 1:**: eine Draufsicht auf eine erfindungsgemäße Vorrichtung;
- **Fig. 2:**: einen seitlichen Schnitt durch die in Fig. 1 dargestellte Vorrichtung entlang der Linie 9;
- **Fig. 3:**: eine Darstellung des zeitlichen Ablaufs der Betriebsphasen der in den Figuren 1 und 2 dargestellten Vorrichtung; und
- **Fig. 4:**: eine Darstellung des Zusammenhangs zwischen Belastung und resultierender substratproportionaler Atmung (SPA).

Zum besseren Verständnis der Figuren werden die verwendeten Bezugszeichen nachfolgend beschrieben:
1 Behälterwand
2 Überführung von Kontaktor in Kaptor
3 Überführung von Kaptor in Reaktor
4 Belebtschlammpumpe
5 Ablauf des gereinigten Abwassers
6 Reaktor
7 Kaptor
8 Kontakor
9 linie x-x
10 Dekanter
11 Mindestwasserspiegel im Reaktor
12 Wasserspiegel im Kontaktor
13 Leitwand zum Reaktor
14 Sauerstoff und Temperatur Messung
15 Zuführöffnung von Kaptor in Reaktor
16 Belüftungssystem
17 Sedimentationsschicht
18 Absperrungen für Belüftung
19 Zuführung für Abwasser
20 Rückführung von Belebtschlamm
21 nicht belüftete Phase
22 Behandlungszyklus
23 Belüftungsphase
24 Reaktionsphase
25 Trennwände
26 Belüftungsblasen
27 obere Behälterkante
28 zu den weiteren Einheiten
29 Gebläse / Luftsauerstoffzuführeinrichtung
30 Sedimentation
31 Dekantieren, Klarwasserabzug
32 Überlaufkante von Kontaktor in Kaptor
33 Schlammablass Kaptor
34 Schlammablass Reaktor

Der Erfindung liegt die Erkenntnis zugrunde, dass die Messung der zugrundeliegenden Sauerstoffaufnahmerate nur dann als repräsentativ bewertet werden kann, wenn die Mischung aus belebtem Schlamm und Rohabwasser bereits in einem vorangehenden Schritt der Akklimatisierung im gleichen Zyklus konditioniert worden ist und ein genügend großer Anteil an so akklimatisiertem Belebtschlamm unmittelbar bei Beginn der Belüftungsphase 23 der Messung zur Verfügung steht. Jedoch darf dabei kein Rohwasser aus der Rohabwasserzuführung 19 nach Abschalten der Belüftung während des Abziehvorganges des Klarwassers durch einen Dekanter 10 dem Reaktor 6 zuströmen oder sich in diesem ausbreiten.

Daher findet die Erkenntnis Anwendung, dass die Summe an zugeführtem und rezirkuliertem Abwasser während der nicht belüfteten Phase 21, also während der Phase der Sedimentation 30 und Klarwasserdekantierung 31, als Volumensäquivalent in den voranstehenden Konditionierungsräumen Kaptor 7 und Kontaktor 8 Platz finden muss, wobei der so bereits vorkonditionierte Schlamm während der Absetzungsphase durch pneumatische Mischung mittels Luftsauerstoffzuführung und Verdrängung aus dem Kontaktor 8, der bei konstantem Wasserspiegel zu betreiben ist, in den Kaptor 7 verlagert wird.

Der Kaptor 7 ist dadurch gekennzeichnet, dass er während der Sedimentationsphase 30 und der Belüftungsphase 23 keine Prozessluftversorgung erfährt und so durch Sedimentation eine Vorabtrennung des im vorgelagerten Kontaktor 8 biologisch vorgereinigten und konditionierten Belebtschlammes erlaubt. Damit kommt es zu einer Abtrennung, Aufkonzentration und Ausbildung einer deutlich wahrnehmbaren Sedimentationsschicht 17 mit darüber liegender Klarwasserphase, wenn der Kaptor 7 hydraulisch solcher Art ausgebildet wird, dass er Schlammfraktionen mit Sedimentationsgeschwindigkeiten bis 15 m/h, besser 7 m/h, idealer Weise jedoch 1 - 5 m/h abscheiden kann.

Solcher Art konditionierte Belebtschlammbiozönosen, im Kaptor 7 gespeichert und vom Reaktor 6 durch die Leitwand 13 getrennt, erlauben es nach erfolgtem Klarwasserabzug das Belüftungssystem 16 im Kaptor 7 und im Reaktor 6 durch geeignete Absperrungen 18 zunächst bei beginnender Belüftungsphase 23 wieder einzuschalten und durch das geeignete Platzieren einer Sauerstoff- und Temperaturmesssonde 14 die in der nachfolgenden Belüftungsphase 23 erforderliche Reaktionszeit des Belebtschlammes im Reaktor 6 über eine repräsentative Atmungsratenbestimmung zu berechnen und zur automatischen Anpassung der Belüftungsphasenlänge 23 zu verwenden.

Besonders vorteilhaft lässt sich die Erfindung dadurch realisieren, dass ein bei konstantem Wasserspiegel 12 betriebener Kontaktor 8 eine gleichbleibende Menge an Rezirkulationsschlamm 20 und eine variable Menge an Rohabwasser 19 kontinuierlich erhält und mit Trennwänden 25 ausgestattet ist, welche eine Umlenkung des Rohwassers ermöglichen. Der Kontaktor 8 weist ein während der nicht belüfteten Phase 21 im Reaktor 6 betreibbares Belüftungssystem 16 auf, welches in dieser Phase gleichzeitig auch für die Belüftung weiterer Reaktoren von parallelen Einheiten 28 verwendet wird. Hierdurch kann ein einzelnes Gebläse als Luftsauerstoffzuführeinrichtung 29 mehrere weitere Einheiten versorgen, bei denen die Belüftungsphasen 23 bevorzugt derart zueinander versetzt sind, dass das einzelne Gebläse durchgehend betrieben werden kann und ein häufiges An- und Ausschalten des Gebläses vermieden wird. Das Belüftungssystem 16 ist dadurch kennzeichnet, dass die Summe aus hydrostatischem Wasserspiegel 12 und Druckverlust des Belüftungssystems 16 jener Summe aus hydrostatischem Mindestwasserspiegel 11 im Reaktor 6 zuzüglich dem Druckverlust des Belüftungssystems 16 im Reaktor 6 entspricht, gefolgt von einem mit wechselnden Wasserspiegel betriebenem Kaptor 7, welcher ebenfalls mit dem Belüftungssystem 16 ausgestattet ist und sich in freier Wasserspiegelkommunikation mit dem ebenfalls mit variablem Wasserspiegel und dem Belüftungssystem 16 versehenen Reaktor 6 befindet. Die Zuführöffnung 15 des Kaptors 7 in den Reaktor 6 befindet sich in der Nähe des während der Befüllphase ansteigenden, gemeinsamen Wasserspiegels 11. Die Einströmung von konditionierter Belebtschlammbiozönose in den Reaktor 6 wird während der Dekantationsphase durch eine Leitwand 13 sicher unterbunden. Die solcher Art hintereinander geschalteten drei Kammern eines Behältnisses, Kontaktor 8, Kaptor 7 und Reaktor 6 sind während des gesamten Zyklus durch Rohabwasser beschickt und seriell durchflossen, wobei zusätzlich Belebtschlamm aus dem Reaktor 6 in den Kontaktor 8 mittels einer Rückführung 20 rezirkuliert wird und sich gemeinsam mit dem eingemengten Rohabwasser kontinuierlich von Kontaktor 8 in den Kaptor 7 ergießt. Der Kaptor 7 ist dadurch gekennzeichnet, dass er während der nicht belüfteten Phase 21 als Vorsedimentationsraum genutzt wird. Sedimentierter Belebtschlamm kann zum Zwecke der Begrenzung der Aufenthaltszeit der Biozönose im System aus Kaptor 7 oder Reaktor 6 beliebig abgezogen und entfernt werden. Eine besonders vorteilhafte Aufteilung des Gesamtvolumens von Kaptor 7 und Kontaktor 8 wird dadurch erreicht, dass die Grundrissfläche der beiden in einem Verhältnis von 10:90 bis 90:10, aufgeteilt wird und volumenmäßig den während der nicht belüfteten Phase 21 erhaltenen Summenzuläufen aus Rohabwasser 19 und Rezirkulationsmenge 20 zumindest entsprechen, jedoch davon nicht mehr als 30% abweichen.

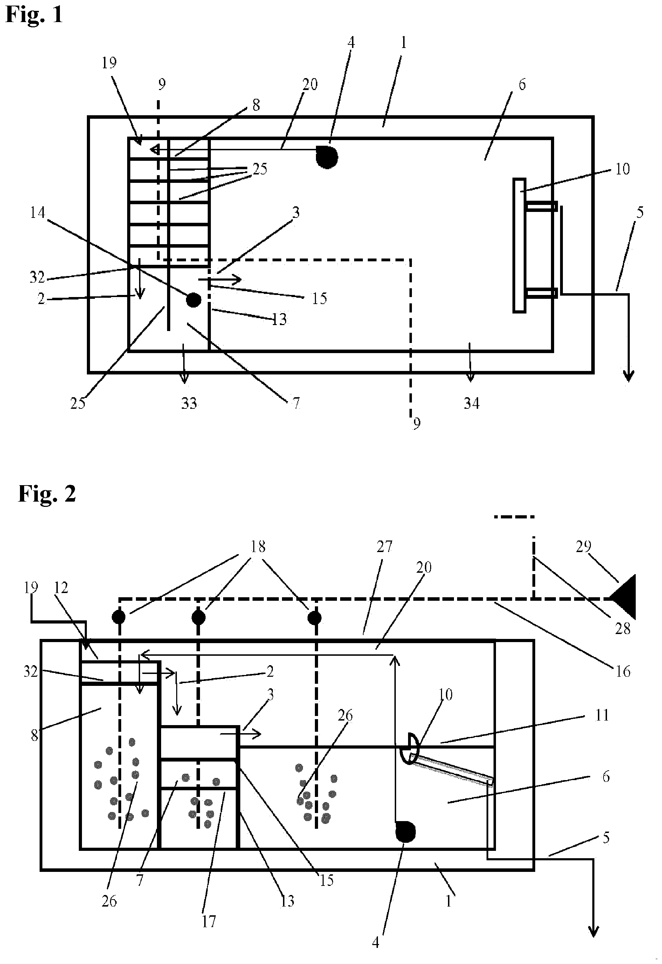

Die Figuren 1 und 2 zeigen ein Behältnis, bestehend aus einer oder mehreren Einheiten 28 mit drei in Serie geschaltenen Kammern, dem Kontaktor 8, dem Kaptor 7 und dem Reaktor 6 umfasst von einer Behälterwand 1 mit einer oberen Behälterkante 27 und intern unterteilt mit Trennwänden 25 im Kontaktor 8 und Leitwänden 13 zu Abtrennung des Kaptor 7 von dem Reaktor 6. Die Kammern 6, 7, und 8 sind mit einem Belüftungssystem 16 bestehend aus einer Gebläseeinheit 29 und Absperrungen 18 zur Erzeugung von Belüftungsblasen 26 ausgestattet. In dem Reaktor 6 ist ein Dekanter 10 vorgesehen, der klares Wasser über eine Ablaufkonfiguration 5 aus dem Reaktor 6 abziehen kann.

Der Reaktor 6 ist mit einer Belebtschlammpumpe 4 ausgestattet, welche Belebtschlamm aus dem Reaktor 6 in den Kontaktor 8 mittels einer Rückführung 20 rezirkuliert, wo sich der Belebtschlamm mit dem Zulauf 19 an Rohwasser vermengt und sich das so vermengte Gemisch aus biologischem Schlamm und Abwasser durch den Kontaktor 8 bei konstantem Wasserspiegel 12 bewegt und sich anschließend über eine fixe Überlaufkante 32 in den Kaptor 7 an der Überführung 2 von Kontaktor 8 zu Kaptor 7 ergießt. Im Kaptor 7 weist das Gemisch einen variablen Wasserspiegel auf, der mit dem Wasserspiegel in Reaktor 11 in freier Flüssigkeitskommunikation befindet und während des Behandlungszyklus 22 ansteigt. Das Gemisch tritt durch eine Überführung 3, welche einer Zuführöffnung 1 von Kaptor 7 in Reaktor 6 bedarf, die unter dem Mindestwasserspiegel des Reaktors 11 liegt, aus dem Kaptor 7 in den Reaktor 6.

Der Behandlungszyklus 22 besteht aus einer Reaktionsphase 24 mit eingebetteter Belüftungsphase 23 und der nicht belüfteten Phase 21 mit Sedimentationsphase 30 und Dekantieren 31.

Darüber hinaus wird aus Ablässen überschüssiger Schlamm aus dem System abgezogen. Besonders vorteilhaft ist, dass der Schlamm entweder aus dem Kaptor 7, dem Reaktor 6 oder aus beiden Kammern abgezogen werden kann, wofür jeweils eigene Abführeinrichtungen 33, 34 vorgesehen werden können. Dieses können in Gestalt von Rohren, einer Pumpe oder einer anderen geeigneten und an sich bekannten Abführvorrichtung für Schlamm ausgebildet sein.

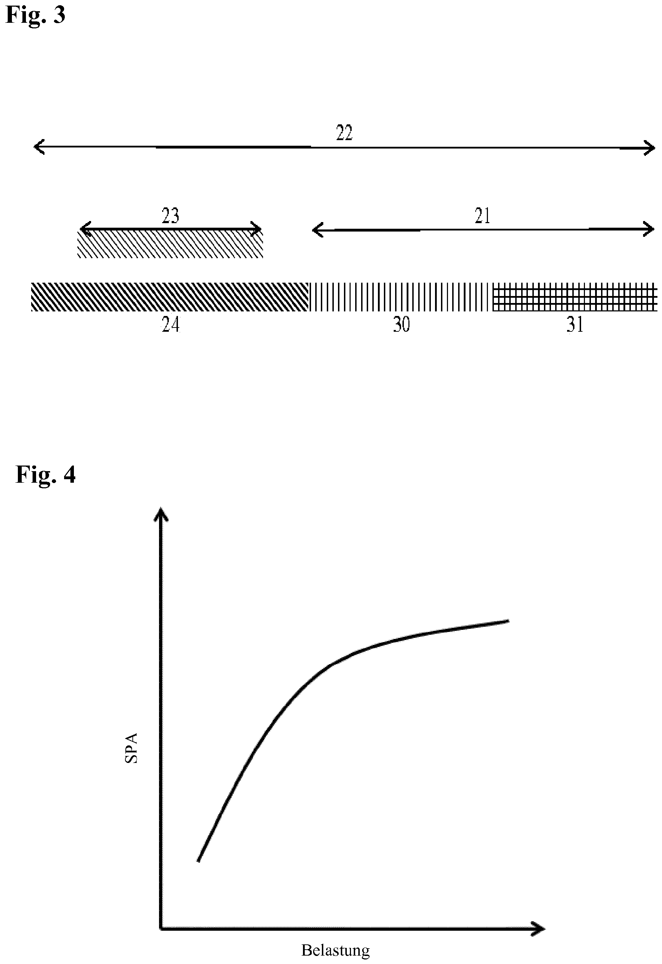

Figur 4 zeigt die Abhängigkeit der substrat-proportionalen Atmung von der aktuellen Belastung mit abbaubarem Substrat. Die Atmung zeigt bei steigender Belastung eine zunächst ansteigende Kurve welche in weiterer Folge tendenziell eine Abflachung zu einem Maximum hin angibt. Die in üblichen Behandlungsverfahren dargebotene Aufenthaltszeit wird wie dem Fachmann zugänglich eine Verdünnung bewirken welche mit zunehmender hydraulischer Verweilzeit eine zunehmende Vergleichmäßigung der im Reaktor messbaren Atmungsrate bewirkt.

Wird also die im Zulauf vorhanden Konzentration an Inhaltsstoffen z. B durch Online-Messungen von Kohlenstoff- oder Stickstoffkomponenten erfasst, würde zum einen eine weit höhere Schwankung der Atmung prognostiziert werden und zum anderen könnten die Zulaufkonzentrationen vieler Stoffe im Einzelnen nur ungenau und aufwändig in eine gesamte biologische Aktivität umgerechnet werden.

Daher würde es nahe liegen, wie aus der Druckschrift US5,989,428 zu entnehmen ist, die Atmung im Reaktor selbst zu bestimmen. Wird wie nach dem Stand der Technik auch dort in diesem Reaktor gemessen, besteht bei einer Messung am Anfang der Belüftung keine Möglichkeit vorherzusehen welche Atmung im begonnenen Zyklus sich einstellen wird, da das das Substrat erst mit Einschalten der Belüftung zugeführt wird und sich erst über Stunden hinweg im Reaktor ausbreitet. Die an diesem Anfangspunkt messbare Atmung reflektiert also lediglich jene Atmung die durch Substratzugabe im vorangehenden Zyklus nicht veratmet werden konnte bzw. der Grundatmung der im Reaktor selbst befindlichen Biomasse ohne Reaktion auf eine ankommende Substratzugabe. Wird am Ende oder in der Mitte der Belüftungs- und Substratzuführungsphase gemessen, verbleibt keine Zeit, den gesamten Zyklus in der Belüftungszeit oder Belüftungsintensität ausreichend zu beeinflussen.

Die getrennte Einrichtung eines verkleinerten Online-Respirometers, wie in US 5,989,428 vorgeschlagen, würde eine sehr aufwendige Regelung erforderlich machen um die Massenströme von Biomasse und Substrat den zu erwartenden - aber eben nicht genau bekannten - Verhältnissen im Reaktor anzupassen und daraufhin abzustimmen. Dem Fachmann ist klar, dass auch bei aufwändiger Ausgestaltung eines solchen getrennten Respirometers doch immer von der Realität abweichende Verhältnisse vorliegen werden die eine weitere Korrektur von Messwerten zur weiterführenden Steuerung der Anlage und somit eine weiter Unschärfe in der Prozessjustierung mit sich bringen muss.

Bei der Erfindung kommt also dem Punkt der Messung und der der Messung zugrundeliegenden Probemenge entscheidende Bedeutung zu. Die gesamte Abwassermenge, welche dem Reaktor 6 in der Belüftungsphase 23 zukommt, wird zunächst im Kontaktor 8 und im Kaptor 7 gespeichert und dem Reaktor 6 durch das Prinzip der hydraulischen Verdrängung und nicht durch Verdünnung zugeführt. Zusätzlich wird dazu im Kaptor 7 ausreichend akklimatisierter Schlamm zur Verfügung gestellt der das richtige Verhältnis zwischen Vergleichmäßigung auf der einen Seite und korrekter Wiedergabe der Belastungsspitze auf der anderen Seite automatisch erreicht, ohne dahingehend für die Interpretation der Messungen oder der nachfolgenden Regelungskette durch zusätzliche Messgeräte wie etwa Messungen der Biomassekonzentration korrigierend eingreifen zu müssen.

Bei der der Erfindung zugrunde gelegten Bemessung und Betrieb des Kaptors 7 wird in der nicht belüfteten Phase 21 ebendort Belebtschlamm aufkonzentriert, welcher zuvor im Kontaktor 8 die adsorbierbaren Anteile des ankommenden Substrates in sich aufgenommen hat und es stellt sich automatisch ein Verhältnis von Substrat zu Biomasse ein, welches nun tatsächlich relevante Aufschlüsse darüber gibt was nachfolgend im Reaktor 6 an metabolischer Aktivität zu erwarten sein wird.

Damit kann man durch die der Erfindung zugrunde liegende Verfahrensführung und Vorrichtung sicher stellen, dass eben ein exakt identisches Batch, welches zunächst in Kontaktor 8 und Kaptor 7 angerichtet wurde, in der nachfolgenden Reaktionsphase 24 dem Reaktor 6 zugeführt wird und die diskrete Information betreffend des Verhältnisses an Substrat und Biomasse, die in dieser Zubereitung vorliegend, auch gemessen werden kann und im Reaktor in gleicher Weise in Form von oxidativen und reduktiven Prozessen die Umsetzung erfährt.

Bei Einschalten des Belüftungssystems 16 im Reaktor 6 und im Kaptor 7 kann also im Kaptor 7 selbst oder an geeigneten Stellen am Übertritt 3 von Kaptor 7 in Reaktor 6 oder an günstig angeströmten Stellen im Reaktor 6 selbst eine exakte Messung der Atmung durchgeführt werden welche jene Belastung angibt, die nun in der verbleibenden Belüftungszeit nach und nach dem Reaktor 6 zugeführt werden wird.

Da die Phasen der Belüftung und der Nicht-Belüftung nach Figur 3 annähernd gleiche Zeitdauern aufweisen bzw. nur unwesentlich von einander abweichen wird in der Belüftungsphase 23 jenes Volumen dem Reaktor 6 zugeführt, welches zuvor im Kontaktor 8 und im Kaptor 7 konditioniert und gespeichert wurde.

Bevorzugte Merkmale der Erfindung sind somit die Größe und Ausführung von Kontaktor 8 und Kaptor 7 gemeinsam, die Ausbildung und Oberfläche des Kaptors 7 alleine sowie insbesondere die Anordnung des Sauerstoffmessgerätes 14 im Kaptor 7 selbst.

Das Sauerstoffmessgerät 14 wird verbunden mit einer Auswerteeinheit aus der Änderung der Sauerstoffkonzentration im Kaptor 7 am Übertritt 3 von Kaptor 7 in Reaktor 6 oder an strömungsbegünstigten Stellen im Reaktor 6 selbst aus der relativen Änderung der Sauerstoffkonzentration über die Zeit bei einer definierten Sauerstoff oder Prozessluftzufuhr, um den aktuellen substrat-proportionalen Atmungsanteil (SPA) errechnen können und diesen in ein Steuersignal zur Einstellung der Belüftungsdauer und/oder der Belüftungsintensität im Reaktor 6 hochzurechnen.

Die Einheit aus Sauerstoffmessung 14 und Auswerteeinheit wird also dazu verwendet die nach genauen Bedingungen im Kaptor 7 und Kontaktor 8 konditionierten Volumenströme von Belebtschlamm und Substrat aus dem ankommenden Abwasser bzw. die Verhältnisse der beiden Volumenströme zueinander auf die resultierende SPA zu vermessen und nachfolgend ein Regelsystem (CS) und zwar im Reaktor 6 in Gang zu setzen, welches zusammengefasst als substratproprotionales Kontrollsystem (SPACS) bezeichnet wird.

Die der Erfindung zugrunde gelegten Vorrichtung sowie Verfahrensführung erlaubt es nunmehr die SPA als relevante Mess- und Regelgröße zu verwenden und jede kurzfristige Änderung der Sauerstoffkonzentration bei bekannter Luft oder Sauerstoffzuführungsrate in eine Stellgröße umzuwandeln, ohne die genaue Konzentration an Biomasse messen zu müssen oder, wie beispielsweise in WO 1998 030504 A1 offenbart, die Messung des absinkenden Schlammspiegels bei abgeschalteter Belüftung als Korrekturgröße einzuführen oder das Redoxpotential in irgend einem der Reaktorteile einstellen oder beachten zu müssen.

Dies gelingt auch deshalb in beschriebener Art und Weise, weil die Beförderung von Biomasse in den Kaptor 7 über ein Pumpe 14 in konstanter Art und Weise erfolgt und eine undefinierte Rückströmung vom Biomasse aus dem Reaktor 6 in den Kaptor 7 durch Druckluftmischung, wie in US 4,633,044 dargelegt ist, durch den andauernden Zulauf und der geometrischen Ausbildung des Kontaktors 8 und des Kaptors 7 verhindert wird.

Somit erfährt der Kaptor 7 in der nicht belüfteten Phase 21 in jedem Zyklus dieselbe, kontinuierlich-sequentielle Beschickung (Contiseq) mit Biomassefracht die dort aber solange gespeichert vorliegt bzw. verbleibt und mit den variablen Teilen des Zulaufstromes repräsentativ in jedem der sich stetig wiederholenden Zyklen belastet wird, bis der Beginn der Belüftungsphase die SPACS Messung und Regelung erlaubt, um danach durch weitergehende Beschickung bei gleichzeitiger Belüftung im Kaptor 7 und/ oder im Kontaktor 8 in den Reaktor annähernd vollständig verdrängt und verlagert zu werden, wobei die vorab gemessene SPA durch Zugabe von Prozessluft durch das Gebläse 29 und das Belüftungssystem 16 bereit gestellt werden kann.

Der Vorteil der Erfindung liegt also nicht nur darin eine dreiteilige Vorrichtung zu erhalten, bestehend aus Kontaktor 8, Kaptor 7 und Reaktor 6 welche in geeigneter Weise einer Sauerstoffmessung Aufnahme bietet um Stellsignale zu ermitteln, sondern durch die Verfahrensführung und die damit verbundenen Massenströme, welche in Verbindung mit der geometrischen Durchbildung der genannten einzelnen Teile die Einstellung des Belüftungssystems 16 in der Art erlaubt, dass eine errechnete Masse an Sauerstoff in einer beliebigen Zeiteinheit eingetragen werden kann, wobei die im Rahmen der Reaktionsphase 24 vorgegebene Maximalzeit nicht überschritten wird, jedoch die Eintragszeit sich lediglich am Punkt der akkumulierten maximalen Effizienz des Belüftungssystems 16 und des Gebläses 29 gemeinsam orientiert und durch die der Sauerstoffmessung 16 angeschlossenen Auswerteeinheit vorgegeben wird.

## Patentansprüche

1. Verfahren zur Konditionierung eines biologisch abbaubaren Abwasserstroms (19) durch drei in Serie geschaltete Kammern (6, 7, 8), wobei der Abwasserstrom (19) in eine als Kontaktor (8) bezeichnete erste Kammer zufließt, von dort in eine als Kaptor (7) bezeichnete zweite Kammer geleitet wird und anschließend einer als Reaktor (6) bezeichneten dritten Kammer zugeführt wird, welche in freier Flüssigkeitskommunikation mit dem Kaptor (7) steht und zyklisch in einer Belüftungsphase (23), einer Sedimentationsphase (30) und einem Klarwasserabzug (31) betrieben wird, und Abwasser zusammen mit Belebtschlamm von dem Reaktor (6) in Form einer Rezirkulation zu dem Kontaktor (8) gefördert und dem Kontaktor (8) kontinuierlich Abwasser zugeführt wird, welches im Kontaktor (8) mittels eines Belüftungssystems (16) eine ununterbrochene Luftsauerstoffzuführung erfährt, **dadurch gekennzeichnet, dass** das Belüftungssystem (16) eine Luftsauerstoffzuführung in den Reaktor (6) in Abhängigkeit von einer Atmungsrate des Abwassers im Kaptor (7), welche über die zeitliche Änderung des Sauerstoffgehalts des Abwassers in dem Kaptor (7) im selben Zyklus bestimmt wird, regelt, wobei der Wasserspiegel im Kontaktor (8) mittels einer Überlaufkante (32) zwischen dem Kontaktor (8) und dem Kaptor (7) konstant gehalten und das Abwasser über diese Überlaufkante (32) in einem konstanten Abfluss von dem Kontaktor (8) zu dem Kaptor (7) geleitet wird.

2. Verfahren nach Anspruch 1, **dadurch gekennzeichnet, dass** bei geringer zeitlicher Änderung des Sauerstoffgehalts des Abwassers im Kaptor (7) eine hohe Luftsauerstoffzuführung und bei größerer zeitlicher Änderung des Sauerstoffgehalts des Abwassers im Kaptor (7) eine geringere Luftsauerstoffzuführung in das Abwasser im Reaktor (6) über das Belüftungssystem (16) erfolgt.

3. Verfahren nach Anspruch 1 oder 2, **dadurch gekennzeichnet, dass** die zeitliche Änderung des Sauerstoffgehalts des Abwassers im Kaptor (7) durch eine Messung der Änderung der Geschwindigkeit des Sauerstoffanstieges im Kaptor (7) bei Einschalten des Belüftungssystems (16) im Kaptor (7) ermittelt wird.

4. Verfahren nach einem der vorhergehenden Ansprüche, **dadurch gekennzeichnet, dass** die Luftsauerstoffzuführung in den Reaktor (6) durch das Belüftungssystem (16) durch Einstellen der Dauer und/oder der Intensität der Luftsauerstoffzuführung erfolgt.

5. Verfahren nach einem der vorhergehenden Ansprüche, **dadurch gekennzeichnet, dass** die Messung der zeitlichen Änderung des Sauerstoffgehalts des Abwassers im Kaptor (7) mittels mindestens einer im Kaptor (7) angeordneten Sauerstoffsonde (14) erfolgt.

6. Verfahren nach einem der vorhergehenden Ansprüche, **dadurch gekennzeichnet, dass** das Belüftungssystem (16) Absperrungen (19) umfasst, mit denen programmgesteuert die Sauerstoffkonzentration in jeder Kammer (6, 7, 8) über eine Zuteilung der Luftsauerstoffzuführung erfolgt.

7. Verfahren nach Anspruch 6, **dadurch gekennzeichnet, dass** die Zuteilung der Luftsauerstoffzuführung derart erfolgt, dass die Summe aus Druckverlust des Belüftungssystems (16) im Kontaktor (8) zuzüglich des konstanten Wasserspiegels im Kontaktor (8) gleich ist der Summe aus Druckverlust des Belüftungssystems (16) im Reaktor (6) zuzüglich des hydrostatischen Mindestwasserspiegels Reaktor (6) bzw. die Summen um nicht mehr als 60 %, besser jedoch um nicht mehr als 40 % voneinander abweichen.

8. Verfahren nach einem der vorhergehenden Ansprüche, **dadurch gekennzeichnet, dass** die Sauerstoffkonzentration im Reaktor (6) mittels mindestens einer im Reaktor (6) angeordneten weiteren Sauerstoffsonde gemessen wird und abhängig davon die mittels des Belüftungssystems (16) in den Reaktor (6) eingeführte Luftsauerstoffzuführung fein eingestellt wird

## Claims

1. Method for conditioning a biodegradable waste water stream (19) through three series-connected chambers (6, 7, 8), wherein the waste water stream (19) flows into a first chamber designated as contactor (8), is passed from there into a second chamber designated as captor (7) and then is supplied to a third chamber designated as reactor (6) and which is in free liquid communication with the captor (7) and is operated cyclically in an aeration phase (23), a sedimentation phase (30) and clear water discharge (31), and waste water together with activated sludge is conveyed from the reactor (6) in the form of recirculation to the contactor (8) and waste water is supplied continuously to the contactor (8) and experiences uninterrupted atmospheric oxygen supply in the contactor (8) by means of an aeration system (16), **characterised in that** the aeration system (16) regulates an atmospheric oxygen supply to the reactor (6) as a function of a respiration rate of the waste water in the captor (7), which is determined in the same cycle via the change in oxygen content of the waste water over time in the captor (7), wherein the water level in the contactor (8) is kept constant by means of an overflow edge (32) between the contactor (8) and the captor (7) and the waste water is passed over this overflow edge (32) in a constant outflow from the contactor (8) to the captor (7).

2. Method according to claim 1, **characterised in that** with low change in oxygen content of the waste water over time in the captor (7), a high atmospheric oxygen supply, and with greater change in oxygen content of the waste water over time in the captor (7), a lower atmospheric oxygen supply, to the waste water in the reactor (6) is effected via the aeration system (16).

3. Method according to claim 1 or 2, **characterised in that** the change in oxygen content of the waste water over time in the captor (7) is ascertained by a measurement of the change in rate of oxygen increase in the captor (7) when switching on the aeration system (16) in the captor (7).

4. Method according to one of the preceding claims, **characterised in that** the atmospheric oxygen supply to the reactor (6) is effected through the aeration system (16) by adjusting the duration and/or the intensity of the atmospheric oxygen supply.

5. Method according to one of the preceding claims, **characterised in that** the measurement of the change in oxygen content of the waste water over time in the captor (7) is effected by means of at least one oxygen probe (14) arranged in the captor (7).

6. Method according to one of the preceding claims, **characterised in that** the aeration system (16) comprises closures (19), with which the oxygen concentration in each chamber (6, 7, 8) is effected in programme-controlled manner via distribution of the atmospheric oxygen supply.

7. Method according to claim 6, **characterised in that** the distribution of the atmospheric oxygen supply is effected such that the sum of pressure loss of the aeration system (16) in the contactor (8) plus the constant water level in the contactor (8) is the same as the sum of pressure loss of the aeration system (16) in the reactor (6) plus the hydrostatic minimum water level reactor (6) or the sums deviate from one another by not more than 60%, but better by not more than 40%.

8. Method according to one of the preceding claims, **characterised in that** the oxygen concentration in the reactor (6) is measured by means of at least one further oxygen probe arranged in the reactor (6) and depending thereon, the atmospheric oxygen supply introduced into the reactor (6) by means of the aeration system (16) is finely adjusted.

## Revendications

1. Procédé de traitement d'un flux d'eaux résiduaires (19) biodégradable par trois chambres (6, 7, 8) connectées en série, dans lequel le flux d'eaux résiduaires (19) afflue dans une première chambre désignée en tant que contacteur (8), de là est acheminé dans une deuxième chambre désignée en tant que capteur (7) puis est amené dans une troisième chambre désignée en tant que réacteur (6), laquelle est en communication fluidique libre avec le capteur (7) et fonctionne de manière cyclique lors d'une phase d'aération (23), d'une phase de sédimentation (30) et d'une décharge d'eau claire (31), et les eaux résiduaires sont refoulées conjointement avec de la boue activée depuis le réacteur (6) sous la forme d'une recirculation vers le contacteur (8) et les eaux résiduaires sont amenées en continu au contacteur (8), lesquelles subissent dans le contacteur (8) au moyen d'un système d'aération (16) une amenée d'oxygène de l'air ininterrompue, **caractérisé en ce que** le système d'aération (16) régule une amenée d'oxygène de l'air dans le réacteur (6) en fonction d'une vitesse de respiration des eaux résiduaires dans le capteur (7), laquelle est définie par l'intermédiaire de la modification dans le temps de la teneur en oxygène des eaux résiduaires dans le capteur (7) dans le même cycle, dans lequel le niveau d'eau dans le contacteur (8) est maintenu constant au moyen d'un bord de débordement (32) entre le contacteur (8) et le capteur (7) et les eaux résiduaires sont acheminées par l'intermédiaire dudit bord de débordement (32) en un écoulement constant depuis le contacteur (8) vers le capteur (7).

2. Procédé selon la revendication 1, **caractérisé en ce qu'**une amenée d'oxygène de l'air élevée est effectuée lors d'une légère modification dans le temps de la teneur en oxygène des eaux résiduaires dans le capteur (7) et une amenée d'oxygène de l'air inférieure dans les eaux résiduaires dans le réacteur (6) par l'intermédiaire du système d'aération (16) est effectuée lors d'une modification dans le temps plus importante de la teneur en oxygène des eaux résiduaires dans le capteur (7).

3. Procédé selon la revendication 1 ou 2, **caractérisé en ce que** la modification dans le temps de la teneur en oxygène des eaux résiduaires dans le capteur (7) est déterminée par une mesure de la modification de la vitesse de la hausse d'oxygène dans le capteur (7) lors de l'activation du système d'aération (16) dans le capteur (7).

4. Procédé selon l'une quelconque des revendications précédentes, **caractérisé en ce que** l'amenée d'oxygène de l'air dans le réacteur (6) par le système d'aération (16) est effectuée par le réglage de la durée et/ou de l'intensité de l'amenée d'oxygène de l'air.

5. Procédé selon l'une quelconque des revendications précédentes, **caractérisé en ce que** la mesure de la modification dans le temps de la teneur en oxygène des eaux résiduaires dans le capteur (7) est effectuée au moyen d'au moins une sonde d'oxygène (14) disposée dans le capteur (7).

6. Procédé selon l'une quelconque des revendications précédentes, **caractérisé en ce que** le système d'aération (16) comprend des barrières (19), avec lesquelles la concentration en oxygène est effectuée de manière programmée dans chaque chambre (6, 7, 8) par l'intermédiaire d'une attribution de l'amenée d'oxygène de l'air.

7. Procédé selon la revendication 6, **caractérisé en ce que** l'attribution de l'amenée d'oxygène de l'air est effectuée de telle manière que la somme de la perte de pression du système d'aération (16) dans le contacteur (8) plus le niveau d'eau constant dans le contacteur (8) est égale à la somme de la perte de pression du système d'aération (16) dans le réacteur (6) plus le niveau d'eau minimal hydrostatique dans le réacteur (6) ou les sommes ne divergent pas de plus de 60 %, mieux encore pas de plus de 40 % les unes des autres.

8. Procédé selon l'une quelconque des revendications précédentes, **caractérisé en ce que** la concentration en oxygène dans le réacteur (6) est mesurée au moyen d'au moins une autre sonde d'oxygène disposée dans le réacteur (6) et sur cette base l'amenée d'oxygène de l'air introduite dans le réacteur (6) au moyen du système d'aération (16) est réglée avec précision.
